# EUROPÄISCHE PATENTSCHRIFT

(11) **EP 0 947 414 B1**
(45) Veröffentlichungstag und Bekanntmachung des Hinweises auf die Patenterteilung: **05.03.2003**
(21) Anmeldenummer: 99105831.4
(22) Anmeldetag: 23.03.1999
(51) Int. Cl.: B62D 11/18

(54) **Lenksteuersystem für Raupenfahrzeug**
Steering control for tracked vehicles
Commande de direction pour véhicules à chenilles

(30) Priorität: 01.04.1998 US 53600
(43) Veröffentlichungstag der Anmeldung: 06.10.1999
(73) Patentinhaber: DEERE & COMPANY, Moline, Illinois 61265-8098 (US)
(72) Erfinder: Easton, David Joseph, Cedar Falls, Iowa 50613 (US)
(74) Vertreter: Lau-Loskill, Philipp, Dipl.-Phys.

(56) Entgegenhaltungen:
- DE-A- 1 755 401
- US-A- 4 519 275
- US-A- 5 473 541

## Beschreibung

Die Erfindung betrifft ein Lenksteuersystem für ein Raupenfahrzeug, enthaltend einen Antriebsmotor, der eine linke und eine rechte Raupenlaufbahn des Raupenfahrzeugs mittels eines differentiellen Antriebsmechanismus antreibt, wobei auf den Antriebsmechanismus wenigstens ein Lenkmotor einwirkt, durch den sich in Abhängigkeit der Lenkmotordrehzahl eine Relativgeschwindigkeit zwischen der linken und der rechten Raupenlaufbahn einstellen läßt. Das Lenksteuersystem enthält einen Fahrzeuggeschwindigkeitssensor, einen Lenkmotordrehzahlsensor, eine durch eine Bedienungsperson einstellbare Lenkeingabevorrichtung und eine Steuereinheit zur Steuerung der Lenkmotordrehzahl in Abhängigkeit der Einstellung der Lenkeingabevorrichtung.

Ein derartiges Lenksteuersystem geht aus der US-A-4,519,275 hervor.

Raupenfahrzeuge werden gelenkt, indem die Gleisbahn auf einer Fahrzeugseite schneller oder langsamer als die Gleisbahn auf der anderen Fahrzeugseite angetrieben wird. Die meisten Raupenfahrzeuge mit Differentiallenkung weisen eine Lenkpumpe auf, die durch den Fahrzeugmotor und nicht vom Boden aus angetrieben wird, so daß das Fahrzeug wenden kann ohne translatorische Fahrzeugbewegung in Vorwärts- oder Rückwärtsrichtung auszuführen. Hierdurch lassen sich Lenkpumpen vertretbarer Größe verwenden. Bei zur Zeit erhältlichen Raupenfahrzeugen, wie beispielsweise beim 8000T Traktor der Fa. John Deere oder bei Raupenfahrzeugen von Caterpillar ist das Lenkrad federzentriert, so daß keine Fahrzeugwendung auftritt, ohne daß die Bedienungsperson absichtlich das Lenkrad aus seiner federzentrierten Mittelstellung heraus dreht und entsprechende Lenkbefehle erzeugt. Ein derartiges Lenksteuersystem ist in der EP-A2-0 857 641 beschrieben.

In der nachveröffentlichten EP-A2-0 926 046 ist eine nicht federzentrierte Lenkeingabevorrichtung beschrieben. Diese nicht federzentrierte Lenkeingabevorrichtung macht eine Lenkfunktion möglich, welche ähnlich der Lenkfunktion eines Radfahrzeugs wirkt. Um Wiederholungen zu vermeiden wird auf die Offenbarung dieser europäischen Patentanmeldung Bezug genommen.

Ein Hauptcharakteristikum der Lenkungsfunktion eines Radfahrzeugs ist es, daß sich durch Drehen des Lenkrades eine bestimmte Kurvenform des Fahrzeugwegs einstellen läßt, wobei das Ausmaß der Kurve weitgehend unabhängig von der Motordrehzahl, der Raddrehzahl, dem Fahrzeuggewicht oder den Bodenverhältnissen ist. Diese Charakteristik wird bei Raupenfahrzeugen dadurch erreicht, daß die Raddrehzahl und die Lenkmotordrehzahl erfaßt werden und daß die relative Geschwindigkeit der Laufbahnen im Verhältnis zu der Raddrehzahl gesteuert wird. Wenn sich das Fahrzeug schnell bewegt, haben die Laufbahnen eine große relative Bewegung. Diese relative Bewegung wird mit langsamer werdendem Fahrzeug reduziert. Wenn das Fahrzeug keine vorwärts oder rückwärts gerichtete Längsbewegung ausführt, tritt auch keine relative Bewegung der Laufbahnen mehr auf.

Wenn jedoch mit der oben zitierten Lenkeingabevorrichtung das Fahrzeug eine scharfe Kurve ausführt und der Antrieb durch Einstellung des Getriebes in seine Neutralstellung oder durch Betätigung der Kupplung ausgerückt ist, ist es möglich, daß durch das Fahrzeugbewegungsmoment die Fahrzeugbewegung fortgesetzt wird oder daß tatsächlich der Lenkmotor das Fahrzeug durch diese scharfe Kurve bewegt. Das Steuersystem erfaßt die Längsbewegung des Fahrzeugs und gibt Steuerbefehle zur Einstellung der passenden Laufbahnrelativbewegung ab, um den Wenderadius aufrechtzuerhalten. Ist jedoch in Wirklichkeit die Laufbahnrelativbewegung die Ursache der Längsbewegung, dann ist es möglich, daß das Fahrzeug unbeabsichtigt das Wenden so lange fortsetzt bis die Bedienungsperson eingreift. Dies wird im folgenden mit selbst-perpetuierendes Wenden bezeichnet. Es ist wünschenswert, ein Lenksteuersystem bereitzustellen, durch welches ein selbst-perpetuierendes Wenden verhindert oder wenigstens begrenzt wird.

Die der Erfindung zugrunde liegende Aufgabe wird darin gesehen, ein gattungsgemäßes Lenksteuersystem für Raupenfahrzeuge für eine nicht federzentrierte Lenkeingabevorrichtung anzugeben, welches ein selbst-perpetuierendes Wenden nicht erlaubt oder mindestens begrenzt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Zur Anwendung für eine bevorzugte Ausgestaltung der Erfindung enthält das Raupenfahrzeug ein Differenzsteuersystem, mit einer variablen hydraulischen Verstellpumpe, mit einem hydraulischen Konstantmotor mit einem elektro-mechanischen Lenkgestänge und mit einem nicht federzentrierten Lenkrad. Das bevorzugte Lenksteuersystem erfaßt die Lenkradlage, die Fahrzeuggeschwindigkeit, die Motordrehzahl und die Lenkmotordrehzahl. Es erfaßt desweiteren, ob sich das Getriebe in einem Gang oder in Neutralstellung befindet und ob die Kupplung eingerückt oder ausgerückt ist. Das Lenksteuersystem führt einen Algorithmus aus, um stufenweise und wiederholt den Sollwert der Lenkmotordrehzahl dann zu vermindern, wenn das Getriebe in Neutralstellung oder die Kupplung nicht eingerückt ist (d. h. der Antriebsmotor treibt nicht den differentiellen Antriebsmechanismus an), wenn die Lenkmotordrehzahl dividiert durch die Raddrehzahl größer als ein Schwellwert ist und wenn die Raddrehzahl kleiner als ein bestimmtere Bruchteil der Motordrehzahl ist. Alternativ kann ein Algorithmus ein Ansteigen der Lenkmotordrehzahl verhindern, wenn ein Verhältnis der Lenkmotordrehzahl zu der Fahrzeuggeschwindigkeit größer ist als ein Schwellwert.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das vereinfachte, schematische Diagramm des Antriebs eines Raupenfahrzeugs mit einem erfindungsgemäßen Lenksteuersystem,
- Fig. 2: das logische Flußdiagramm eines Algorithmus, der durch ein in Fig. 1 dargestelltes Steuersystem ausgeführt wird, und
- Fig. 3: das logische Flußdiagramm eines Algorithmus für eine alternative Ausführung der Erfindung.

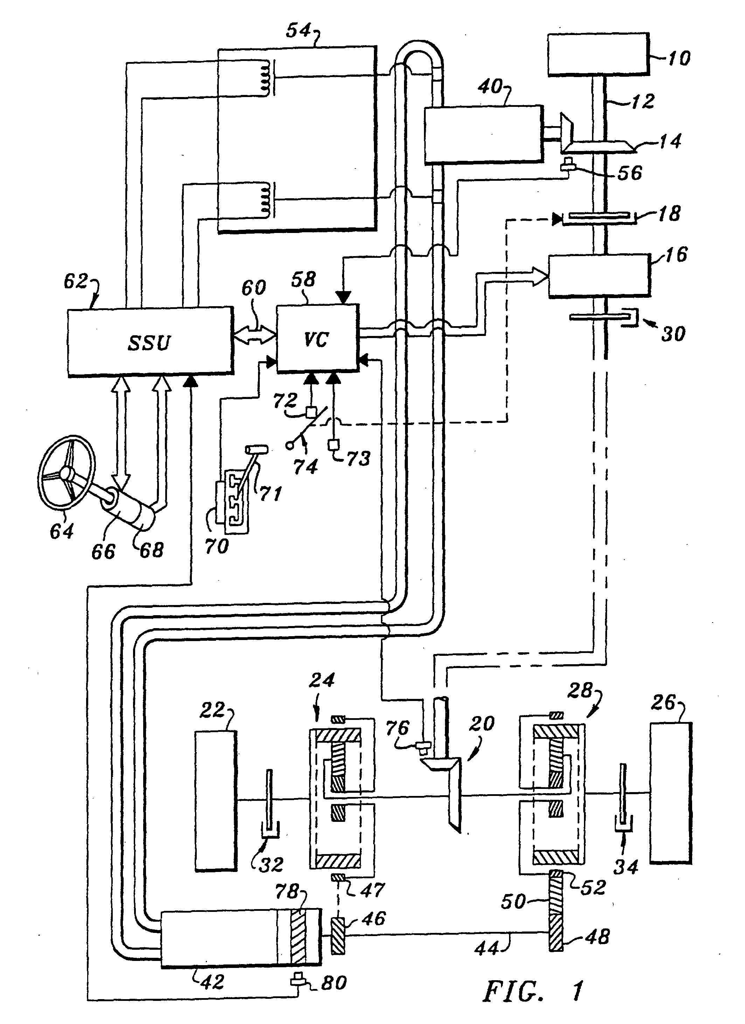

Aus Fig. 1 geht der Antriebsstrang eines Raupenfahrzeugs hervor, welcher einen Antriebsmotor 10 mit einer Ausgangswelle 12 aufweist, die ein rechtwinkliges Kegelrad 14 sowie über eine Kupplung 18 ein Getriebe 16 antreibt. Unter Zwischenschaltung eines rechtwinkliges Kegelradgetriebes 20 treibt das Getriebe 16 einerseits über ein linkes Lenkplanetengetriebe 24 ein linkes Laufbahnantriebsrad 22 und andererseits über ein rechtes Lenkplanetengetriebe 28 ein rechtes Laufbahnantriebsrad 26 an. Die Lenkplanetengetriebe 24 und 28 sind vorzugsweise so ausgebildet, wie die in der US-A-5,390,751 beschriebenen. Zusätzlich sind zwischen den Lenkplanetengetrieben 24, 28 und dem jeweils zugehörigen Laufbahnantriebsrad 22, 26 nicht dargestellte außenliegende Planetengetriebe, wie sie bei den John Deere Traktoren der 8000-er Serie vorgesehen sind, angeordnet. Diese werden hier jedoch nicht näher beschrieben, weil sie nicht in die Lenksteuerfunktion der vorliegenden Erfindung einbezogen sind. Eine Parkbremse 30 befindet sich an der Ausgangswelle des Getriebes 16. Linke und rechte Betriebsbremsen 32, 34 sind mit dem linken bzw. dem rechten Laufbahnantriebsrad 22, 26 gekoppelt.

Das rechtwinklige Kegelrad 14 treibt eine hydraulische Lenkverstellpumpe 40, beispielsweise eine 75 cc Pumpe der Serie 90 von der Firma Sauer-Sundstrand, an. Die Lenkverstellpumpe 40 versorgt ihrerseits einen hydraulischen Lenkkonstantmotor 42, beispielsweise einen 75 cc Motor der Serie 90 ebenfalls von der Firma Sauer-Sundstrand. Der Lenkkonstantmotor 42 treibt über eine Querwelle 44 und ein Zahnrad 46 ein Ringrad 47 des linken Lenkplanetengetriebes 24 sowie über die Querwelle 44, ein Zahnrad 48 und ein Umkehrzahnrad 50 ein Ringrad 52 des rechten Lenkplanetengetriebes 28 an.

Die nicht gezeigte Schrägscheibe der Lenkverstellpumpe 40 wird durch ein Drucksteuerventil oder eine elektronische Verstellsteuerung (electronic displacement control: EDC) 54 gesteuert. Die EDC 54 ist vorzugsweise eine bekannte Zweistufenvorrichtung mit einer ersten Stufe, welche ein Klappenrückschlagventil enthält, und mit einer zweiten Stufe, welche eine Druckerhöhungsstufe für die Lenkverstellpumpe 40 enthält, wie sie beispielsweise bei den käuflich erhältlichen John Deere 8000T Gleisbahntraktoren verwendet werden.

Ein Drehzahlsensor 56, wie beispielsweise ein käuflich erhältlicher magnetischer Aufnehmer, der in der Nähe des rechtwinkligen Kegelrads 14 befestigt ist, liefert ein elektrisches Antriebsmotordrehzahlsignal an eine Fahrzeugsteuereinrichtung (vehicle controller: VC) 58, wie sie beispielsweise von dem käuflich erhältlichen John Deere 8000T Gleisbahntraktoren bekannt ist. Die Fahrzeugsteuereinrichtung 58 steuert das Getriebe 16 und andere Fahrzeugfunktionen. Sie ist über einen Bus 60 mit einem Lenkkontroller oder einer elektrischen Lenksystemsteuereinheit (steering system unit: SSU) 62 verbunden. Die Magnetspulen der Verstellsteuerung EDC 54 werden durch Pumpensollwertsignale, die durch die SSU 62 erzeugt werden, gesteuert.

Ein durch die Bedienungsperson betätigbares Lenkrad 64 ist vorzugsweise nicht federzentriert und läßt sich über einen unbegrenzten Winkelbereich in beide Richtungen verdrehen. Es steht mit einer variablen, die Reibung erfassenden Lenkeingabevorrichtung 66 in Verbindung, wie sie beispielsweise in der am 8. Dezember 1998 eingereichten europäischen Patentanmeldung mit der Anmeldenummer 98123354.7 beschrieben wurde, auf deren Offenbarung hiermit Bezug genommen wird. Die Lenkeingabevorrichtung 66 enthält vorzugsweise eine Wandlereinheit 68, die den Lageänderungen des Lenkrades 64 entsprechende Signale erzeugt, welche an die SSU 62 weitergeleitet werden. Die Wandlereinheit 68 enthält vorzugsweise zwei nicht näher gezeigte durch Zahnräder angetriebene inkrementale Drehencoder, beispielsweise im Handel erhältliche Encoder des Typs OakGrinsby 900 Optical Encoder oder des Typs Grayhill Series 61H.

Ein Schalthebelsignalwandler 70, wie er beispielsweise in der US-A-5,406,860 beschrieben wurde, liefert in Abhängigkeit der Stellung eines Ganghebels 71 Gangauswahlsignale für Vorwärts, Neutral und Rückwärts an eine nicht näher dargestellte Lastschaltgetriebesteuereinheit, die Teil der Fahrzeugsteuereinrichtung VC 58 ist. Die Kupplungsschalter 72 und 73 liefern an die VC 58 (und über den Bus 60 an die SSU 62) entsprechende Signale, wenn das Kupplungspedal 74 vollständig unbetätigt bzw. vollständig niedergetreten ist.

Ein Antriebsstrangdrehzahlsensor 76, vorzugsweise ein differentieller Halleffektdrehzahlsensor, wie er beispielsweise bei von John Deere hergestellten Traktoren verwendet wird, ist in der Nähe des Kegelradgetriebes 20 angeordnet und liefert an die VC 58 (und über den Bus 60 an die SSU 62) ein elektrisches Endantriebsdrehzahl-, Fahrzeuggeschwindigkeits- bzw. Raddrehzahlsignal. Ein Magnetring 78 ist drehbar am Lenkkonstantmotor 42 montiert, und ein Halleffektwandler 80, der nahe des Magnetrings 78 befestigt ist, liefert an die SSU 62 ein elektrisches Lenkmotordrehzahlsignal und ein elektrisches Lenkmotordrehrichtungssignal.

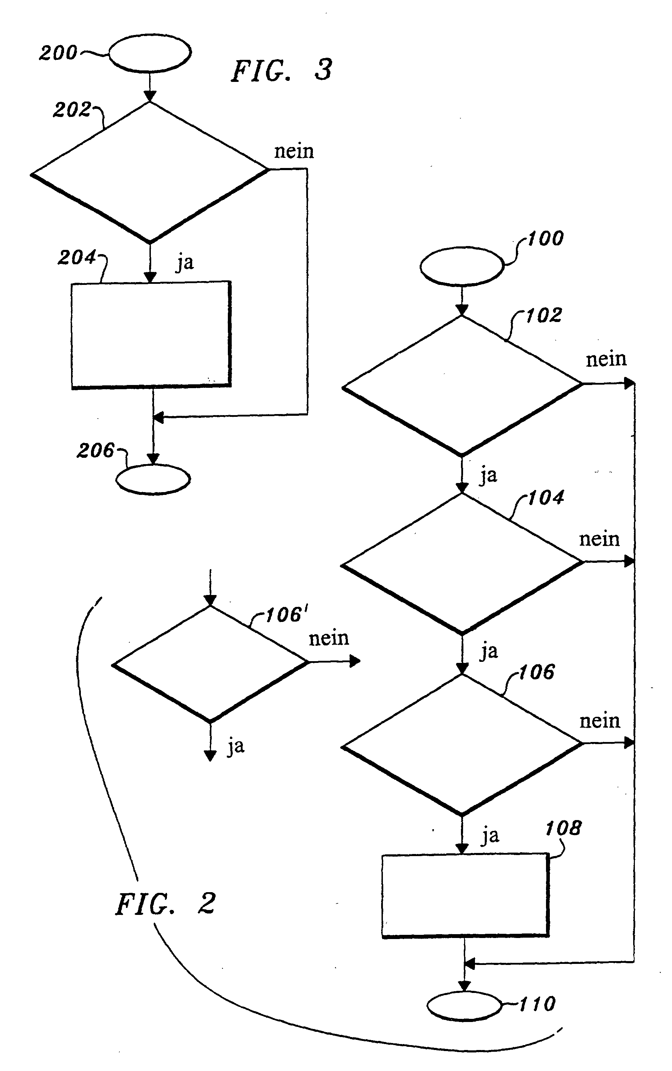

Die SSU 62 enthält vorzugsweise einen nicht dargestellten, käuflich verfügbaren Mikroprozessor und steuert die Drehzahl des Lenkkonstantmotors 42 in Abhängigkeit verschiedener Eingangsgrößen, wie es in der EP-A2-0 857 641 beschrieben wurde, auf deren Offenbarung hiermit Bezug genommen wird. Ausgenommen der Lenkeingabevorrichtung 66 und des in Fig. 2 illustrierten Algorithmus sind die in Fig. 1 dargestellten Elemente ähnlich denen, die in im Handel erhältlichen John Deere 8000T Schleppern Verwendung finden.

Gemäß der Erfindung führt die SSU 62, beispielsweise alle 20 Millisekunden, eine Hauptschleifensteuerprogramm aus, durch welches ein Algorithmus oder ein Unterprogramm aufgerufen wird, welches in Fig. 2 dargestellt ist. Dieses Unterprogramm beginnt mit Schritt 100. In Schritt 102 bestimmt der Algorithmus aus Informationen, die ihm von der VC 58 zur Verfügung gestellt werden, ob das Getriebe 16 sich in Neutral befindet oder nicht, und aus Informationen, die ihm von den Kupplungspedalschaltern 72 und 73 zur Verfügung gestellt werden, ob die Kupplung 18 nicht eingerückt ist. Befindet sich das Getriebe nicht in Neutral und ist die Kupplung 18 eingerückt, so richtet Schritt 102 den Algorithmus auf Schritt 110, durch welchen die Steuerung auf die Hauptschleife zurückgeführt wird. Befindet sich andererseits das Getriebe 16 in Neutral oder ist die Kupplung 18 nicht eingerückt, so richtet Schritt 102 den Algorithmus auf den Schritt 104.

Schritt 104 berechnet das Verhältnis der Lenkmotordrehzahl (welches aus dem Signal des Halleffektwandlers 80 abgeleitet wird) geteilt durch die Raddrehzahl (welches aus dem Signal des Antriebsstrangdrehzahlsensors 76 abgeleitet wird) und vergleicht dieses Verhältnis mit einem vorbestimmten Wert, wie beispielsweise 10. Ist das Verhältnis nicht größer als 10, wird der Algorithmus über den Schritt 110 auf den Ausgang des Programms gerichtet. Wenn das Verhältnis größer als 10 ist, wird der Algorithmus auf Schritt 106 gerichtet.

Schritt 106 vergleicht die erfaßte Raddrehzahl mit einem Wert, der gleich einem Bruchteil, beispielsweise 0,06, der Motordrehzahl ist. (Der in Schritt 106 verwendete Faktor 0,06 hängt davon ab, wie schnell sich die Lenkverstellpumpe 40 relativ zur Motordrehzahl und wie schnell sich der Lenkkonstantmotor 42 relativ zur Lenkverstellpumpendrehzahl 40 dreht.) Wenn die Raddrehzahl nicht kleiner als 0,06 mal der Motordrehzahl ist, wird der Algorithmus wieder über den Schritt 110 zum Ausgang des Programms gerichtet. Wenn die Raddrehzahl kleiner als 0,06 mal der Motordrehzahl ist, wird der Algorithmus auf Schritt 108 gerichtet.

Alternativ hierzu kann, wenn keine Motordrehzahl bereitsteht, Schritt 106' an Stelle von Schritt 106 verwendet werden. Schritt 106' vergleicht den erfaßten Raddrehzahl mit einer Referenzfahrzeuggeschwindigkeit, wie beispielsweise 6 Kilometer pro Stunde (km/h). Wenn die Raddrehzahl nicht kleiner als 6 km/h ist, wird der Algorithmus über den Schritt 110 zum Ausgang des Programms gerichtet. Wenn die Raddrehzahl kleiner als 6 km/h ist, wird der Algorithmus auf Schritt 108 gerichtet.

Ausgehend sowohl von Schritt 106 als auch von Schritt 106' kann der Algorithmus mit Schritt 108 fortfahren, durch welchen der absolute Wert eines Zählwertes mit beispielsweise 0,98 multipliziert wird, wodurch eine kleine Reduktion der Drehzahl des Lenkkonstantmotors 42 veranlaßt wird. Dadurch wird die Geschwindigkeitsdifferenz zwischen dem linken und dem rechten Laufbahnantriebsrad 22 bzw. 26 vermindert. Dieses Unterprogramm wird vorzugsweise 50 mal pro Sekunde ausgeführt. Wenn somit die in den Schritten 102 bis 106 festgestellten Bedingungen für eine Sekunde beibehalten werden, vermindern sich der Zählwert und die Lenkmotordrehzahl um fast zwei Drittel.

Es wurde festgestellt, daß für einen Traktor mit einer Spurweite von 2 Metern ein selbst-perpetuierender Wendezustand nur dann bestehen kann, wenn der Wenderadius deutlich unter zwei Metern liegt, und daß ein selbst-perpetuierender Wendezustand nur dann bestehen kann, wenn die in den Schritten 102 bis 106 dargelegten Bedingungen alle erfüllt sind. Sind somit diese Bedingungen erfüllt, reduziert Schritt 108 schrittweise die Drehzahl des Lenkkonstantmotors 42. Dies erhöht den Sollwert des Wenderadius und wirkt einem selbstperpetuierenden Wendezustand entgegen.

Anhand der Figur 3 wird im Folgenden eine alternative Ausführung der Erfindung beschrieben, bei der weder ein Getriebesensor noch ein Kupplungssensor verwendet wird. Dieses alternative Unterprogramm beginnt mit Schritt 200. In Schritt 202 berechnet der Algorithmus ein Verhältnis der Lenkmotordrehzahl (aus dem Signal des Halleffektwandlers 80) geteilt durch die Raddrehzahl (aus dem Signal des Antriebsstrangdrehzahlsensors 76) und vergleicht dieses Verhältnis mit einem vorherbestimmten Wert, beispielsweise 10. Ist das Verhältnis nicht größer als 10, wird der Algorithmus über den Schritt 206 auf den Ausgang des Programms gerichtet. Wenn das Verhältnis größer als 10 ist, wird der Algorithmus auf Schritt 204 gerichtet. Schritt 204 verhindert Steigerungen der Drehzahl des Lenkkonstantmotors 42 und verhindert damit Lenkradien, die kleiner als ein bestimmter Betrag sind, und verhindert damit selbst-perpetuierende Wendezustände.

## Patentansprüche

1. Lenksteuersystem für ein Raupenfahrzeug, enthaltend einen Antriebsmotor (10), der eine linke und eine rechte Raupenlaufbahn des Raupenfahrzeugs mittels eines differentiellen Antriebsmechanismus (24, 28) antreibt, wobei auf den Antriebsmechanismus (24, 28) wenigstens ein Lenkmotor (42) einwirkt, durch den sich in Abhängigkeit der Lenkmotordrehzahl eine Relativgeschwindigkeit zwischen der linken und der rechten Raupenlaufbahn einstellen läßt, mit einem Fahrzeuggeschwindigkeitssensor (76), einem Lenkmotordrehzahlsensor (80), einer durch eine Bedienungsperson einstellbaren Lenkeingabevorrichtung (64) und einer Steuereinheit (62) zur Steuerung der Lenkmotordrehzahl in Abhängigkeit der Einstellung der Lenkeingabevorrichtung (64), **dadurch gekennzeichnet, daß** die Lenkeingabevorrichtung eine nicht zentrierte Lenkeingabevorrichtung (64) ist und daß die Steuereinheit (62) die Sensorsignale derart auswertet, daß sie ein Ansteigen der Lenkmotordrehzahl verhindert, sofern der Quotient aus Lenkmotordrehzahl und Fahrzeuggeschwindigkeit größer als ein Schwellwert ist.

2. Lenksteuersystem für ein Raupenfahrzeug nach Anspruch 1, **dadurch gekennzeichnet, daß** das Raupenfahrzeug einen Antriebsstrang enthält, der wenigstens ein umschaltbares Getriebe (16) und/oder wenigstens eine Kupplung (18) hat, und daß wenigstens ein Getriebesensor zur Erfassung der Neutralstellung des Getriebes (16) und/oder wenigstens ein Kupplungssensor (72, 73) zur Erfassung des Einrückzustandes der Kupplung (18) vorgesehen sind, und daß die Steuereinheit (62) die Sensorsignale auswertet und die Lenkmotordrehzahl reduziert, wenn folgende Bedingungen gegeben sind: das Getriebe ist in Neutral und/oder die Kupplung ist nicht eingerückt und der Quotient aus Lenkmotordrehzahl und Fahrzeuggeschwindigkeit oder Raddrehzahl ist größer als ein Schwellwert.

3. Lenksteuersystem nach Anspruch 1 oder 2, **dadurch gekennzeichnet, daß** die Steuereinheit (62) die Sensorsignale auswertet und die Lenkmotordrehzahl reduziert, wenn die zusätzliche Bedingung gegeben ist, daß die Fahrzeuggeschwindigkeit kleiner ist als ein bestimmter Referenzwert.

4. Lenksteuersystem nach Anspruch 3, **dadurch gekennzeichnet, daß** der Referenzwert ein bestimmter Bruchteil der Antriebsmotordrehzahl ist.

## Claims

1. A steering control system for a tracked vehicle, including a drive engine (10), which drives left and right tracks of the tracked vehicle by means of a differential drive mechanism (24, 28), wherein at least one steering motor (42) acts on the drive mechanism (24, 28) and a relative speed between the left and right tracks can be adjusted in dependence on the steering motor speed, with a vehicle speed sensor (76), a steering motor speed sensor (80), a steering input device (64) operable by an operator and a control unit (62) for controlling the steering motor speed in dependence on the setting of the steering input device (64), **characterized in that** the steering input device is a non-centred steering input device (64) and **in that** the control unit (62) so evaluates the sensor signals that it prevents an increase in the steering motor speed insofar as the quotient of the steering motor speed and the vehicle speed is greater than a threshold value.

2. A steering control system for a tracked vehicle according to claim 1, **characterized in that** the tracked vehicle includes a drive train which has at least one shift transmission (16) and/or at least one clutch (18) and **in that** there are provided at least one transmission sensor for detecting the neutral position of the transmission (16) and/or at least one clutch sensor (72, 73) for detecting the engaged state of the clutch (18), and **in that** the control unit (62) evaluates the sensor signals and reduces the steering motor speed when the following conditions apply: the transmission is in neutral and/or the clutch is not engaged and the quotient of the steering motor speed and the vehicle speed or wheel speed is greater than a threshold.

3. A steering control system vehicle according to claim 1 or 2, **characterized in that** the control unit (62) evaluates the sensor signals and reduces the steering motor speed when the additional condition applies that the vehicle speed is less than a predetermined reference value.

4. A steering control system according to claim 3, **characterized in that** the reference value is a specific fraction of the drive engine speed.

## Revendications

1. Système de direction pour un véhicule à chenilles, contenant un moteur d'entraînement (10), qui entraîne une bande chenille de gauche et une bande de chenille de droite du véhicule à chenilles, à l'aide d'un mécanisme d'entraînement différentiel (24, 28), et dans lequel au moins un moteur de braquage (42) agit sur le mécanisme d'entraînement (24, 28), moteur de braquage à l'aide duquel une vitesse relative entre la voie de circulation de la chenille de gauche et la voie de circulation de la chenille de droite peut être réglée en fonction de la vitesse de rotation du moteur de braquage, et comportant un capteur (80) de la vitesse de rotation du moteur de braquage, un dispositif d'entrée de braquage (64) réglable par un opérateur, et une unité de commande (62) pour commander la vitesse de rotation du moteur de braquage en fonction du réglage du dispositif d'entrée de braquage (64), **caractérisé en ce que** le dispositif d'entrée de braquage est un dispositif d'entrée de braquage non centré (64) et que l'unité de commande (62) évalue les signaux de capteurs de telle sorte que cette unité empêche un accroissement de la vitesse de rotation du moteur de braquage dans la mesure où le quotient entre la vitesse de rotation du moteur de braquage et la vitesse du véhicule est supérieur à une valeur de seuil.

2. Système de commande de direction pour un véhicule à chenilles selon la revendication 1, **caractérisé en ce que** le véhicule à chenilles contient une chaîne motrice, qui comporte au moins une transmission commutable (16) et/ou au moins un embrayage (18) et qu'il est prévu au moins un détecteur de la transmission pour détecter la position neutre de la transmission (16) et/ou au moins un détecteur (72, 73) de l'embrayage pour détecter l'état enclenché de l'embrayage (18), et que l'unité de commande (62) évalue les signaux des détecteurs et réduit la vitesse de rotation du moteur de braquage lorsque les conditions suivantes sont présentes: la transmission est réglée au neutre et/ou l'embrayage n'est pas enclenché, et le quotient entre la vitesse de rotation du moteur de braquage et la vitesse du véhicule ou la vitesse de rotation de roue est supérieur à une valeur de seuil.

3. Système de commande de direction selon la revendication 1 ou 2, **caractérisé en ce que** l'unité de commande (62) évalue les signaux des détecteurs et réduit la vitesse de rotation du moteur de braquage dans le cas de la présence de la condition supplémentaire consistant **en ce que** la vitesse du véhicule est inférieure à une valeur de référence déterminée.

4. Système de commande de de direction selon la revendication 3, **caractérisé en ce que** la valeur de référence est une fraction de la vitesse de rotation du moteur d'entraînement.
